## Europäisches Patentamt

## European Patent Office

## Office européen des brevets

(19)

(11) Publication number: **0 015 096**
**B1**

(12)     **EUROPEAN PATENT SPECIFICATION**

(45) Date of publication of patent specification: **01.06.83**

(21) Application number: **80300339.1**

(22) Date of filing: **06.02.80**

(51) Int. Cl.³: **B 23 Q 3/15,** H 01 F 7/00,
H 01 F 1/00

(54) Magnetic holder.

(30) Priority: **08.02.79 JP 14044/79**

(43) Date of publication of application:
**03.09.80 Bulletin 80/18**

(45) Publication of the grant of the patent:
**01.06.83 Bulletin 83/22**

(84) Designated Contracting States:
**DE FR GB IT**

(56) References cited:
**DE - A - 2 647 503**
**US - A - 2 421 716**
**US - A - 2 445 459**
**US - A - 3 806 336**
**US - A - 3 954 519**
**US - A - 3 969 657**
**US - A - 3 989 556**
**US - A - 4 171 978**

(73) Proprietor: **INOUE-JAPAX RESEARCH
INCORPORATED**
**5289 Aza Michimasa Nagatsudamachi Midoriku
Yokohamashi Kanagawaken (JP)**

(72) Inventor: **Inoue, Kiyoshi**
**3-16-8 Kamiyoga**
**Setagayaku, Tokyo (JP)**

(74) Representative: **Saunders, Harry**
**SAUNDERS & DOLLEYMORE 2 Norfolk Road**
**Rickmansworth Hertfordshire WD3 1JH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Magnetic holder

The present invention relates to a magnetic holder and, more particularly, to an improved magnetic holder for releasably retaining a ferromagnetic or magnetically susceptible object, e.g. a workpiece in a machine tool or an article to be retentively carried on a crane, conveyor or like transportation system.

Conventional magnetic holders, also commonly called magnetic chucks, make use of a core member composed of a magnetically permeable or magnetically "soft" material as part of an electromagnet, which magnet includes a coil wound on the core member. In such holders, the coil must be continuously energized to keep the core member magnetized by a continuous direct-current source during the time in which an object is to be held in position, and the release of the object from the retention position is effected by simple disconnection of the power supply, which demagnetizes the core member. During the retention period, however, the continuous passage of the energization current through the coil gives rise to the generation of heat which may cause thermal distortion of the retained object, a holding table and other surrounding components. In a machine tool, for example, such distortion is undesirable since machining accuracy is seriously affected thereby. Furthermore, even an accidental interruption of the power supply causes the object to be unintentionally released and this may lead to dangerous results.

In the prior patent specification US—A— 2 445 459 there is provided in such a magnetic holder or chuck means for destroying the remanent magnetic flux that remains in the core member after the electromagnet coil associated therewith has been de-energized, thus facilitating the release of the object retained on the holder. Thus, in that specification there is disclosed a magnetic holder or chuck for releasably retaining a magnetically susceptible object, in which holder a coil means is electromagnetically associated with a core member of the holder and is connected via a multi-position switch to a source of energizing current for magnetization of the core member when said switch is in a first position, said switch being operable to a second position for energization of the coil means whereby to demagnetize said core member. Such a magnetic holder will be referred to hereinafter as a "magnetic holder of the kind referred to above". In the particular arrangements disclosed in that prior art specification the demagnetization of core member is effected by establishing in the coil means a demagnetizing damped oscillatory current flow, by the connection of a charged capacitor across the coil means.

The prior art specification US—A— 3 969 657 discloses a simplified arrangement for magnetizing and/or demagnetizing permanent magnet materials by means of a single coil means. That arrangement also utilises the flow in said coil means of a demagnetizing damped oscillatory current to effect demagnetization of a permanent magnet. Control of the magnetizing/demagnetizing current is effected by means of a single electronic switch, and the choice of a magnetizing or demagnetizing current flow is determined by the position of changeover switches.

According to the present invention a magnetic holder of the kind referred to above is characterized in that said core member is composed of a magnetically semi-hard material, and that the energizing current for demagnetization of said core member is in the form of a momentary short-duration essentially unidirectional pulse passed through said coil means in one direction from the electrical current source, which source also delivers the energizing current for magnetization of said core member, said magnetizing current being likewise in the form of a momentary short-duration essentially unidirectional pulse but being passed through said coil means in the other direction due to a polarity reversal effected by means of said switch.

By means of such an improved arrangement, the disadvantages of the prior art as mentioned above are avoided, and a very simple and compact form of magnetic holder can be constructed.

Semi-hard magnets have widely been used in various meters, brakes, clutches and motors and are characterized by possessing a relatively low coercive force and a capability of both permanent magnetization and demagnetization with ease. The material, once magnetized, is capable of retaining magnetism without continued external energization. In the present disclosure, the term "semi-hard magnetic materials" or "magnetically semi-hard materials" may be defined as magnetic materials having a residual flux density (Br) of not less than 6000 Gauss (i.e. 0.6 Tesla) and a coercive force in the range between 100 and 1000 Oersted (i.e. between 7958 and 79578 Amperes/metre), preferably not greater than 600 Oersted (i.e. 47747 Amperes/metre). While any of other known materials such as Al-Ni-Co-Fe alloys, Cr-Mo-Fe alloys, Fe-Cr-V alloys and Fe-Mn-Ti alloys may be used, preference is herein given to the use of spinodal decomposition type alloy embodied as any of Fe-Cr-Co, Fe-Cr-Co-Mo, Fe-Cr-Co-W, Fe-Cr-Co-Nb, Fe-Cr-Co-Nb-Al and Fe-Cr-Co-V as described in US Patents No. 3,806,336 issued April 23, 1974, No. 3,954,519 issued May 4, 1976 and No. 4,171,978 issued October 23, 1979, or modifications or additions of these alloys because of desirable magnetic properties highly suitable to this end. Semi-hard magnetic materials are also disclosed in the patent specification US—A—3 989 556.

One form of magnetic holder embodying the invention will now be described, by way of example, with reference to the accompanying diagrammatic drawing, in which:—

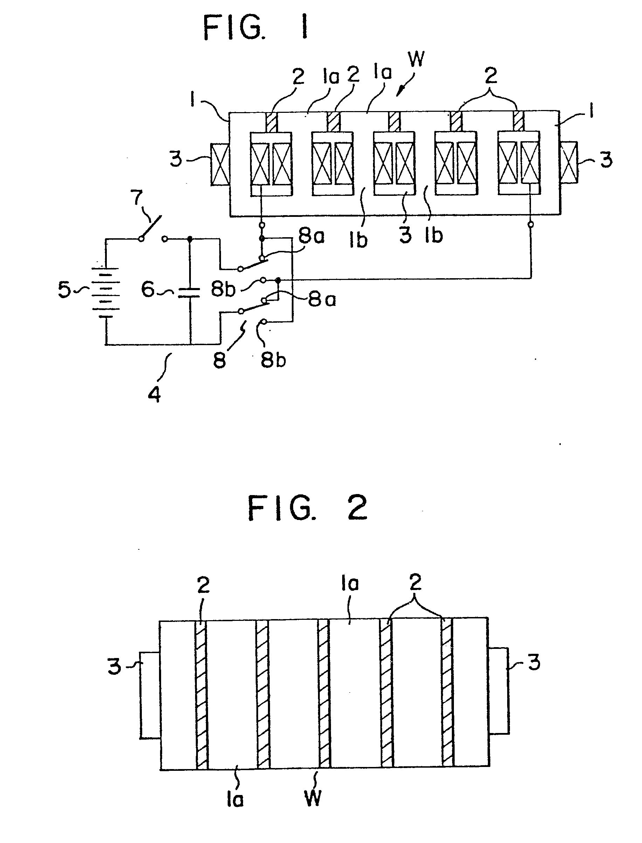

Figure 1 is a schematic side view of the holder, partly in section; and

Figure 2 is a plan view of a working surface of the holder shown in Figure 1.

Referring to the drawings, a core member 1 composed of a semi-hard magnetic material has at a working surface W thereof a plurality of parallel magnetic zones 1a separated from one another by non-magnetic or magnetically non-permeable strip zones 2 which provide magnetic gaps between adjacent magnetic zones 1a and which are flush therewith. A plurality of coils 3 connected in series are mounted on the core member 1 so as to surround respective leg portions 1b thereof which support the parallel magnetic working zones 1a, and are arranged for energization by a power supply 4 so that magnetic fluxes are generated transverse to the working surface W. The power supply 4 is constituted by a DC source 5 and a capacitor 6 connected in parallel therewith via a charging switch 7. When the switch 7 is closed, the direct current from the source 5 is allowed to flow to charge the capacitor 6. Upon charging the capacitor 6, the switch 7 is opened to disconnect it from the DC source 5. The capacitor 6 is also connectable with the serially connected coils 3 via a polarity reversal switch 8 which has two operative positions. When the switch 8 is put into one position 8a or another 8b, the capacitor 6 is connected to the coils 3 to impulsively discharge the charge stored therein, thereby passing an essentially unidirectional current pulse through the coils 3 in one direction or the other.

The position 8a in which the switch 8 is shown is adapted to pass the electrical current pulse through the coils 3 in such a direction that the semi-hard magnetic core member 1 is magnetized thereby. Once magnetized, the core member 1, because of its semi-hard magnetic characteristic, is capable of retaining its magnetization and continuously attracting a ferromagnetic or magnetically susceptible object, e.g. a workpiece in a machine tool or any other article (not shown), onto the working zones 1a without continued energization of the coils 3. Thus, after discharging of the capacitor 6, the switch 8 is placed in a neutral or inoperative position to disconnect it from the coils 3, whereupon the switch 7 is closed to allow recharging of the capacitor 6 by the DC source 5.

The demagnetization of the core member 1 is achieved by placing the switch 8 in the position 8b upon opening the charging switch 7. This causes the charge stored on the capacitor 6 to be again impulsively discharged through the coils 3. The resulting unidirectional current pulse through the energizing coils 3 in this instance is such that the core member 1 is previously magnetized is demagnetized thereby allowing the object previously held to be released.

A highly satisfactory magnetic holding device is thus provided which permits selective retention and releasing of a ferromagnetic or magnetically permeable object by instantaneous magnetization and demagnetization of the core member 1, without the need for continued energization of the coils 3 while the object is being retained as desired.

The use of an impulsive electrical current as shown to energize the coils 3 in the respective instances is advantageous to effectively and readily magnetize and demagnetize the core member 1, although a square DC pulse may also be used in each instance if desired.

There is thus provided in accordance with the present invention an improved magnetic holder for releasably retaining a ferromagnetic object, which allows the magnetization and demagnetization of a core member 1 to be effected with ease and which permits the object to be kept retained *in situ* after de-energization of the operating coils 3 upon magnetization of the core member 1. This advantageously eliminates the conventional requirement for the continued application of the energization current during the operating period in which the object is to be held, and effectively reduces the electrical power needed while alleviating the problem of heat generation and operating trouble as met by prior magnetic holding devices. Furthermore, the proposed device facilitates electrical insulation of the energization coils and, since it allows conductors constituting the coils to be thinner, advantageously makes the unit compact and less costly to manufacture. It should also be noted that the absence of an energization current during the retention period eliminates the possibility of the object unintentionally becoming dislodged by accidental power failure or interruption during that period. A trouble-free magnetic holder which allows extremely easy retention and detachment operations is thus provided.

While the embodiment of the invention illustrated makes use of a semi-hard magnetic body constituting the core member integrally extending from the base portion thereof to the magnetic working zones 1a, the latter zones may be constituted by separate plates of a magnetically permeable or soft material adapted to carry magnetic flux generated by a supporting core member of semi-hard magnetic material.

## Claims

1. A magnetic holder for releasably retaining a magnetically susceptible object, wherein a coil means (3) is electromagnetically associated with a core member (1) of said holder and is connectable via a multi-position switch to a source (4) of energizing current for magnetization of the core member (1) when the switch is in a first position (8a), the switch being operable to a second position (8b) for energization of the coil (3) whereby to demagnetize said core member (1), characterized in that said core member (1) is composed of a magnetically semi-hard material, and that the energizing current for demagnetization of said core member (1) is in the form of a momentary short-duration essentially unidirectional pulse passed through said coil means (3) in one direction from the electrical current source (4), which source also delivers the energizing current for magnetization of said core member (1), said magnetizing current being likewise in the form of a momentary short-duration essentially unidirectional pulse but being passed through said coil means (3) in the other direction due to a polarity reversal effected by means of said switch (8).

2. A magnetic holder as claimed in Claim 1, wherein said material has a coercive force in the range between 100 and 1000 Oersted (i.e. between 7958 and 79578 Amperes/metre) and a residual flux density of not less than 6000 Gauss (i.e. 0.6 Tesla).

3. A magnetic holder as claimed in Claim 2, wherein said coercive force is not greater than 600 Oersted (i.e. 47747 Amperes/metre).

4. A magnetic holder as claimed in any one of the preceding claims, wherein said material is a spinodal-decomposition type magnetic alloy.

5. A magnetic holder as claimed in any one of the preceding claims, wherein said source comprises a capacitor (6) for discharging a said current pulse through said coil means (3), and a direct current source (5) for charging said capacitor (6) prior to its being discharged through said coil means (3) by operation of said switch to said first or said second position.

## Revendications

1. Support magnétique destiné à maintenir d'une manière amovible un objet présentant une susceptibilité magnétique, support dans lequel une bobine (3) est associée électromagnétiquement à un noyau (1) du support peut être connectée, par l'intermédiaire d'un commutateur à plusieurs positions, à une source (4) de courant d'excitation, afin d'assurer l'aimantation du noyau (1) lorsque le commutateur se trouve dans une première position (8a) ce commutateur pouvant être placé dans une seconde position (8b) d'excitation de la bobine (3) de manière à désaimanter le noyau (1), caractérisé en ce que le noyau (1) est constitué d'un matériau magnétique demi-dur et le courant d'excitation poir assurer la désaimantation du noyau (1) se présente sous la forme d'une impulsion momentanée de courte durée, sensiblement unidirectionnelle, passant à travers la bobine (3) dans une direction à partir de la source de courant électrique (4), cette source délivrant également le courant d'excitation pour l'aimantation du noyau (1), ce courant d'aimantation étant constitué de la même façon sous la forme d'une impulsion momentanée de courte durée, sensiblement unidirectionnelle, mais passant à travers la bobine (3) dans l'autre direction, par suite d'une inversion de polarité réalisée au moyen du commutateur (8).

2. Support magnétique suivant la revendication 1 caractérisé en ce que le matériau a une densité de flux résiduel qui n'est pas inférieure à 6 000 Gauss (c'est-à-dire 0,6 Tesla) et une force coercitive comprise dans la gamme allant de 100 à 1 000 Oersted (c'est-à-dire entre 7 958 et 79 578 Ampères/mètre).

3. Support magnétique suivant la revendication 2 caractérisé en ce que la force coercitive n'est pas supérieure à 600 Oersted (c'est-à-dire 47 447 Ampères/mètre).

4. Support magnétique suivant l'une quelconque des revendication précédentes caractérisé en ce que le matériau est un alliage magnétique du type à décomposition spinodale.

5. Support magnétique suivant l'une quelconque des revendications précédentes caractérisé en ce que la source d'alimentation comprend un condensateur (6) pour décharger une impulsion de courant à travers la bobine (3), et une source de courant continu (5) pour charger le condensateur (6) avant que celui-ci ne soit déchargé à travers la bobine (3), par mise en place du commutateur sur sa première ou seconde position.

## Patentansprüche

1. Magnetischer Halter zum lösbaren Halten eines magnetisch ansprechenden Körpers, wobei eine Spuleneinrichtung (3) einem Kernstück (1) elektromagnetisch zugeordnet ist und über einen Mehrstellenschalter mit einer Quelle (4) zum Magnetisieren des Kernstücks (1) dann verbindbar ist, wenn der Schalter sich in einer ersten Stellung (8a) befindet, wobei der Schalter in eine zweite Stellung (8b) verbringbar ist, in der die Spule (3) mit Strom gespeist wird, wodurch das Kernstück (1) entmagnetisiert wird, dadurch gekennzeichnet, daß das Kernstück (1) aus einem magnetisch halbharten Werkstoff besteht und daß der Speisestrom zur Magnetisierung des Kernstücks (1) als momentaner, kurzzeitiger, im wesentlichen unidirektioneller Impuls vorliegt, der durch die Spuleneinrichtung (3) von der Stromquelle (4) in einer Richtung bzw. unidirektionell fließt, wobei die Quelle auch den Speisestrom zur Magnetisierung des Kernstücks (1) liefert, und wobei der Magnetisierungsstrom ebenfalls als momentaner, kurzzeitiger und im wesentlichen unidirektioneller Impuls vorliegt, der aber durch eine durch den Schalter (8) bewirkte Umpolung durch die Spuleneinrichtung (3) hindurch in der Gegenrichtung fließt.

2. Magnetischer Halter nach Anspruch 1, bei dem das Material eine Koerzitivkraft im Bereich zwischen 100 und 1000 Oersted (entspricht 7958 bis 79578 Ampere/Meter) und eine Remanenz von nicht weniger als 6000 Gauß (entspricht 0,6 Tesla) hat.

3. Magnetischer Halter nach Anspruch 2, bei dem die Koerzitivkraft nicht mehr als 600 Oersted beträgt (entspricht 47747 Ampere/Meter).

4. Magnetischer Halter nach einem der vorhergehenden Ansprüche, bei dem das Material eine magnetische Legierung von der Art des spinodalen Abbaues ist.

5. Magnetischer Halter nach einem der Ansprüche 1 bis 4, dadurch gekennzeichnet, daß die Quelle einen Kondensator (6) zum Entladen des Stromimpulses durch die Spuleneinrichtung (3) sowie eine Gleichstromquelle (5) zum Aufladen des Kondensators (6) vor seiner Entladung durch die Spuleneinrichtung hindurch bei in die erste oder in die zweite Stellung gebrachtem Schalter aufweist.

0 015 096

# FIG. 1

# FIG. 2

1